# EUROPEAN PATENT APPLICATION

(11) **EP 4 794 261 A1**
(43) Date of publication of application: **19.08.2026**
(21) Application number: 24901034.9
(22) Date of filing: 03.12.2024
(51) Int. Cl.: H04L 9/32, H04L 9/40

(54) **ELECTRONIC DEVICE FOR AUTHENTICATION AND OPERATION METHOD THEREOF**

(30) Priority: 05.12.2023 KR 20230174667
(71) Applicant: Samsung Electronics Co., Ltd., Suwon-si, Gyeonggi-do 16677 (KR)
(72) Inventor: KIM, Taehoon, Suwon-si Gyeonggi-do 16677 (KR); KIM, Chulhwan, Suwon-si Gyeonggi-do 16677 (KR)
(74) Representative: Gulde & Partner
(86) International application number: PCT/KR2024/019618
(87) International publication number: WO 2025/121848

(57) **Abstract**

An operation method of an electronic apparatus is disclosed. An operation method of an electronic device according to an embodiment of the present disclosure may comprise the operations of: extracting a certificate from a file stored in the electronic device; in response to identifying that the certificate is a new certificate, transmitting a request for verification of the certificate to a certificate issuance authority; in response to receiving, from the certificate issuance authority, a response that the certificate is valid, determining whether a validity period of the certificate has expired, when the validity period of the certificate has expired, determining whether the certificate is included in an exception list; and in response to determining that the certificate is included in the exception list, storing the certificate in a memory of the electronic device, where the exception list includes at least one certificate.

## Description

### [Technical Field]

Embodiments of the disclosure relate to an electronic device and operation method for authentication.

### [Background Art]

A user terminal or an Internet of things (IoT) device (e.g., a television (TV), a monitor, a smart home appliance, etc.) may perform device authentication for data communication. A certificate may be used for device authentication, and the certificate may ensure a reliable connection in communication between the server and the client. A valid certificate may include a certificate that is signed by a trusted issuer, is generated using an algorithm free from security issues, and has not expired.

### [DISCLOSURE]

### [Technical Solution]

A method for operating an electronic device, according to an embodiment of the disclosure, may include extracting a certificate from files stored in an electronic device, transmitting a verification request for the certificate to a certificate issuing agency based on identifying that the certificate is a new certificate, determining whether a validity period of the certificate expires, based on a response from the certificate issuing agency indicating that the certificate is valid, determining whether the certificate is included in an exception list based on determining that the validity period of the certificate expires, and storing the certificate in the electronic device based on determining that the certificate is included in the exception list, where the exception list may include at least one certificate.

In an embodiment, the method for operating the electronic device may include identifying the certificate as the new certificate based on identifying that the extracted certificate is stored in a memory of the electronic device or a database corresponding to the electronic device.

In an embodiment, the method for operating the electronic device may include determining whether the validity period of the certificate expires may be further performed based on identifying that the extracted certificate is not the new certificate.

In an embodiment, the method for operating the electronic device may include removing the certificate from the electronic device based on identifying that the certificate is not included in the exception list.

In an embodiment, the method for operating the electronic device may include removing the certificate from the electronic device based on a response from the certificate issuing agency indicating that the certificate is invalid.

In an embodiment, the method for operating the electronic device may include extracting the certificate from the file stored in the electronic device may include identifying files stored in the electronic device, extracting character string information from the file, identifying at least one piece of authentication information from the character string information, and extracting the certificate from the at least one piece of authentication information.

In an embodiment, the method for operating the electronic device may include files of the electronic device, which may include a release image of the electronic device.

In an embodiment, the method for operating the electronic device may include may include identifying certificate start information from the character string information, identifying certificate end information, and extracting a character string between the certificate start information and the certificate end information as the certificate.

In an embodiment, the release image may include data related to software and firmware of the electronic device.

In an embodiment, the method for operating the electronic device may include transmitting the verification request for the certificate to the certificate issuing agency through an access point (AP).

An electronic device according to an embodiment of the disclosure may include memory, and processor, where the processor is configured to extract a certificate from files stored in the electronic device, transmit a verification request for the certificate to a certificate issuing agency based on identifying that the certificate is a new certificate, determine whether a validity period of the certificate expires, based on a response from the certificate issuing agency indicating that the certificate is valid, determine whether the certificate is included in an exception list based on determining that the validity period of the certificate expires, and store the certificate in the memory of the electronic device based on determining that the certificate is included in the exception list, where the exception list may include at least one certificate.

In an embodiment, the processor is configured to identify the certificate as the new certificate based on identifying that the extracted certificate is stored in the memory of the electronic device or a database corresponding to the electronic device.

In an embodiment, the processor is configured to determine whether the validity period of the certificate expires based on identifying that the extracted certificate is not the new certificate.

In an embodiment, the processor is configured to remove the certificate from the electronic device based on identifying that the certificate is not included in the exception list.

In an embodiment, the processor is configured to remove the certificate based on a response from the certificate issuing agency indicating that the certificate is invalid.

In an embodiment, the processor is configured to identify files stored in the electronic device, extract character string information from the files, identify at least one piece of authentication information from the character string information, and extract the certificate from the at least one piece of authentication information.

In an embodiment, the processor may include files of the electronic device, which may include a release image of the electronic device.

In an embodiment, the processor is configured to identify certificate start information from the character string information, identify certificate end information, and extract a character string between the certificate start information and the certificate end information as the certificate.

In an embodiment, the release image may include data related to software and firmware of the electronic device.

In an embodiment, the processor is configured to transmit the verification request for the certificate to the certificate issuing agency through an AP.

### [Description of Drawings]

FIG. 1 is a diagram illustrating a configuration of an electronic device according to an embodiment;
FIG. 2 is a diagram illustrating an authentication environment of an electronic device according to an embodiment;
FIG. 3 is a diagram illustrating an electronic device for authentication according to an embodiment;
FIG. 4 illustrates a flowchart of an operation method performed by an electronic device according to an embodiment; and
FIG. 5 illustrates a flowchart of an operation method performed by an electronic device according to an embodiment.

### [MODE FOR INVENTION]

Hereinafter, example embodiments of the disclosure will be described in detail with reference to the accompanying drawings. The same reference numerals are used for the same components in the drawings, and redundant descriptions thereof will be omitted. The embodiments described herein are example embodiments, and thus, the disclosure is not limited thereto and may be realized in various other forms. It is to be understood that singular forms include plural referents unless the context clearly dictates otherwise. The terms including technical or scientific terms used in the disclosure may have the same meanings as generally understood by those skilled in the art.

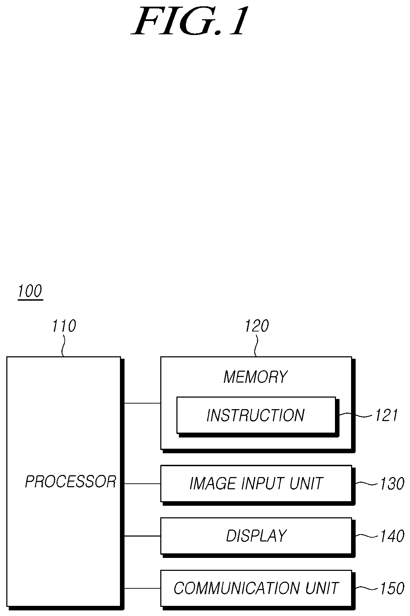

FIG. 1 is a diagram illustrating a configuration of an electronic device according to an embodiment.
An electronic device 100 may perform various computing functions and may include a device capable of performing wireless communication with surrounding electronic devices or server devices (e.g., Internet of things (IoT) server). For example, the electronic device 100 may include a display device (e.g., television (TV) or monitor), a smart home appliance, or a user device (e.g., smartphone or wearable device). However, embodiments are not limited thereto, and the electronic device 100 may be various types of electronic devices without being limited to the above examples.

According to an embodiment, the memory 120 is a storage medium used by the electronic device 100 and may store data, such instructions 121 or configuration information corresponding to at least one program. The program may include an operating system (OS) program and various application programs.

In an embodiment, the memory 120 may include at least one type of storage medium of flash memory types, hard disk types, multimedia card micro types, card types of memories (e.g., secure digital (SD) or XD memory cards), random access memories (RAMs), static RAMs (SRAMs), read-only memories (ROMs), electrically erasable programmable ROMs (EEPROMs), programmable ROMs (PROMs), magnetic memories, magnetic disks, or optical discs. However, embodiments are not limited thereto, and the memory 120 may be implemented as other suitable types of memories as will be understood by one of ordinary skill in the art from the disclosure herein.

According to an embodiment, the image input device 130 may receive images and image information through a tuner, an input/output device, or the communication device 150. The image input device 130 may include at least one of the tuner and the input/output device. The tuner may tune and select only the frequency of the broadcast channel to be received by the electronic device 100 among many radio components, by amplifying, mixing, and resonating the broadcast signals wiredly/wirelessly received. The broadcast signal may include video, audio, and additional data (e.g., electronic program guide (EPG)). The tuner may receive real-time broadcast channels (or real-time viewing images) from various broadcast sources, such as terrestrial broadcasts, cable broadcasts, satellite broadcasts, Internet broadcasts, and the like. The tuner may be implemented integrally with the electronic device 100 or may be implemented as a separate tuner electrically connected to the electronic device 100. The input/output device may include at least one of a high definition multimedia interface (HDMI) input port, a component input jack, a personal computer (PC) input port, and a universal serial bus (USB) input jack capable of receiving an image and image information from an external device of the electronic device 100 under the control of the processor 110. However, embodiments are not limited thereto, and the input/output device may be added, deleted, and/or changed according to the performance and structure of the electronic device 100.

According to an embodiment, the display 140 may perform functions for outputting information in the form of numbers, characters, images, and/or graphics. The display 140 may include at least one hardware module for output. The at least one hardware module may include at least one of, e.g., a liquid crystal display (LCD), a light emitting diode (LED), a light emitting polymer display (LPD), an organic LED (OLED), an active matrix OLED (AMOLED), and flexible LED (FLED). The display 140 may display a screen corresponding to data received from the processor 110. The display 140 may be referred to as an 'output device', a 'display device', etc. The "screen" may include an image displayed on the display of the electronic device. The "image" may be referred to as a frame. Various types of objects, such as icons, text, photos, videos, widgets, etc. may be displayed on the screen.

According to an embodiment, the communication device 150 may provide a wired/wireless communication interface that enables communication with an external device. The communication device 150 may include at least one of a wired Ethernet, a wireless local area network (LAN) communication device, and a short-range communication device. The wireless LAN communication device may include, e.g., Wi-Fi, and may support the wireless LAN standard of the institute of electrical and electronics engineers (IEEE) (e.g., IEEE802.11x). The wireless LAN communication device may be wirelessly connected to an access point (AP) under the control of the processor 110. An AP may include a device for connecting devices by related standards using Wi-Fi in a computer network. The short-range communication device may perform short-range communication wirelessly with an external device under the control of the processor 110. Short-range communication may include Bluetooth, Bluetooth low energy, infrared data association (IrDA), ultra-wideband (UWB), and near-field communication (NFC). The external device may include a server device and a mobile terminal (e.g., phone, tablet, etc.) providing, e.g., a video service.

According to an embodiment, the processor 110 may control at least one other component of the electronic device 100 and/or execute computation or data processing regarding communication by executing at least one instruction 121 stored in the memory 120. The processor 110 may include at least one of a central processing unit (CPU), a graphic processing unit (GPU), a micro controller unit (MCU), a sensor hub, a supplementary processor, a communication processor, an application processor, an application specific integrated circuit (ASIC), and field programmable gate arrays (FPGA) and may have multiple cores.

In an embodiment, the processor 110 may execute, e.g., software to control at least one other component (e.g., a hardware or software component) of the electronic device 100 connected with the processor 110 and may process or compute various data. According to one or more embodiments, as at least portion of the data processing or computation, the processor 110 may store a command or data received from another component onto a volatile memory, process the command or the data stored in the volatile memory, and store resulting data in a non-volatile memory. According to one or more embodiments, the processor 110 may include a main processor (e.g., a CPU or an application processor), or an auxiliary processor (e.g., a GPU, a neural processing unit (NPU), an image signal processor (ISP), a sensor hub processor, or a communication processor (CP)) that is operable independently from, or in conjunction with, a main processor. For example, when the electronic device 100 includes the main processor and the auxiliary processor, the auxiliary processor may be configured to use less power than the main processor or to be specified for a designated function. The auxiliary processor may be implemented separately from, or as part of, the main processor.

In an embodiment, the processor may obtain image frame data from at least one of the memory 120, the image input device 130, and the communication device 150. The processor may receive image frame data from at least one of the memory 120, the image input device 130, and the communication device 150. The image frame data may include data regarding a frame constituting an image. For example, the image frame data may be identified from the memory 120 (e.g., an image recorded and stored). For example, the image frame data may include data obtained from the communication device 150 or the image input device 130 (e.g., real-time streaming image).

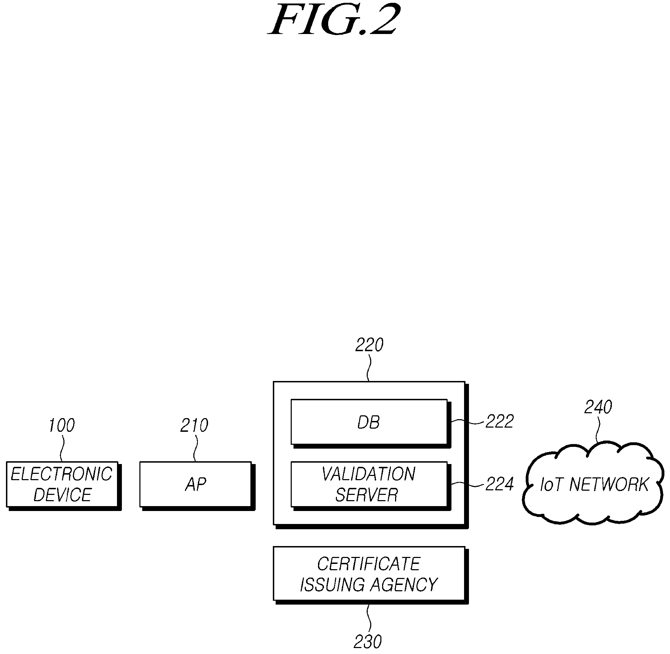

FIG. 2 is a diagram illustrating an authentication environment of an electronic device according to an embodiment.

In an embodiment, an authentication environment of an electronic device 100 may include the electronic device 100 (e.g., an IoT device), an AP 210, a certificate validation device 220, a certificate issuing agency 230, and an IoT network 240.

In an embodiment, the AP 210 may include a device capable of connecting devices using a related standard such as Wi-Fi in a computer network.

In an embodiment, the AP 210 may relay data between a wireless device and a wired device on the network. However, embodiments are not limited thereto, and the AP may relay data between wired devices or data between wireless devices. The AP may also be referred to as a relay device.
In an embodiment, the certificate validation device 220 may perform authentication of a device (e.g., the electronic device 100) requesting communication with the IoT network 240. The certificate validation device 220 may include a certificate database (DB) 222 for storing information about the certificate, and a validation server 224 for processing a series of operations for verifying the certificate.

In an embodiment, the certificate validation device 220 may verify whether the certificate is a valid certificate. The certificate validation device 220 may determine whether the certificate requested to be verified is a valid certificate through communication with the certificate issuing agency 230. For example, the certificate validation device 220 may determine whether information about the corresponding certificate is included in the certificate DB 222 through the validation server 224. For example, when the information about the corresponding certificate is not included in the certificate DB 222, the certificate validation device 220 may transmit a certificate verification request for verifying whether the corresponding certificate is a valid certificate to the certificate issuing agency 230. When the certificate validation device 220 receives a response indicating that the corresponding certificate is a valid certificate from the certificate issuing agency 230, the certificate validation device 220 may determine that the corresponding certificate is valid, and when the certificate validation device 220 receives a response indicating that the corresponding certificate is an invalid certificate, the certificate validation device 220 may determine that the corresponding certificate is invalid.

In an embodiment, the certificate issuing agency 230 may include a device for issuing a certificate to be loaded on the electronic device 100. The certificate issuing agency 230 may issue the certificate and sign the certificate through a root certificate. Although only one certificate issuing agency 230 is illustrated in drawings, a plurality of certificate issuing agencies may be included in the environment for authentication of the electronic device 100.

In an embodiment, the IoT network 240 may include a network of devices for managing the electronic device 100. Various services may be provided to the electronic device 100 through the IoT network 240.

In an embodiment, the IoT network 240 may transmit data only to the verified electronic device 100. The IoT network 240 may receive information about whether the certificate of the electronic device 100 is a valid certificate from the certificate validation device 220.

In an embodiment, although not illustrated, the certificate validation device 220 may be implemented as a part of the electronic device 100. In other words, the certificate validation device 220 may not be implemented as an entity separate from the electronic device 100, but may be implemented as part of the electronic device 100.

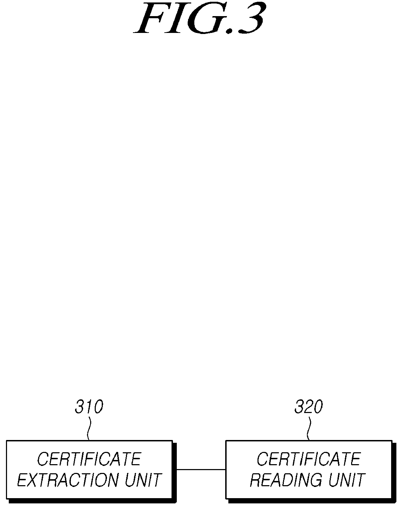

FIG. 3 is a diagram illustrating a configuration of an electronic device according to an embodiment.

In an embodiment, an electronic device 100 may include a certificate extraction unit 310 and a certificate reading unit 320.

In an embodiment, the certificate extraction unit 310 may extract a certificate from a file list installed in the electronic device 100.

In an embodiment, the certificate extraction unit 310 may identify the file list from a release image of the electronic device 100. The file list may be an entire file stored in the electronic device 100 in one or more embodiments. The release image may include an image file of software and firmware installed in the electronic device 100. The release image may include data about an operating system and an application of the electronic device 100.

In an embodiment, the certificate extraction unit 310 may extract the certificate information from the file list. For example, the certificate extraction unit 310 may extract certificate information from the file using a specific command (e.g., an openSSL command).

In an embodiment, the certificate extraction unit 310 may extract string information in the file for all binary files. For example, the certificate extraction unit 310 may extract a specific pattern in the binary file through reversing. For example, the certificate extraction unit 310 may extract a specific pattern in the binary file through a specific command (e.g., a strings command of Linux).

In an embodiment, the certificate extraction unit 310 may convert the pattern into a character string to identify whether there is certificate start information (e.g., BEGIN CERTIFICATE). The certificate extraction unit 310 may analyze a character string following the certificate start information to determine whether there is a character string (e.g., a character string starting with "") used for the certificate information. When there is a character string used for the certificate information in the character string following the certificate start information, the certificate extraction unit 310 may store the character string in the buffer. When the certificate extraction unit 310 identifies the certificate end information (e.g., END CERTIFICATE), the certificate extraction unit 310 may store the character string buffer stored so far as a certificate file (e.g., pem file).

In an embodiment, the certificate extraction unit 310 may extract certificate information from the generated certificate file. The certificate extraction unit 310 may extract certificate information by parsing the generated certificate file with a specific command (e.g., an openSSL command). When the certificate information is normally extracted, the certificate extraction unit 310 may determine that the certificate information is normal certificate information and store the same in the electronic device 100. Otherwise, the certificate extraction unit 310 may discard the same.

In an embodiment, the certificate reading unit 320 may determine whether the extracted certificate is valid. When the extracted certificate is a new certificate, the certificate reading unit 320 may request an authentication device (e.g., the certificate validation device 220) to verify whether the certificate is valid. The certificate reading unit 320 may determine whether the validity period of the extracted certificate expires. When it is determined that the extracted certificate is a valid certificate, the certificate reading unit 320 may store the certificate in the electronic device 100.

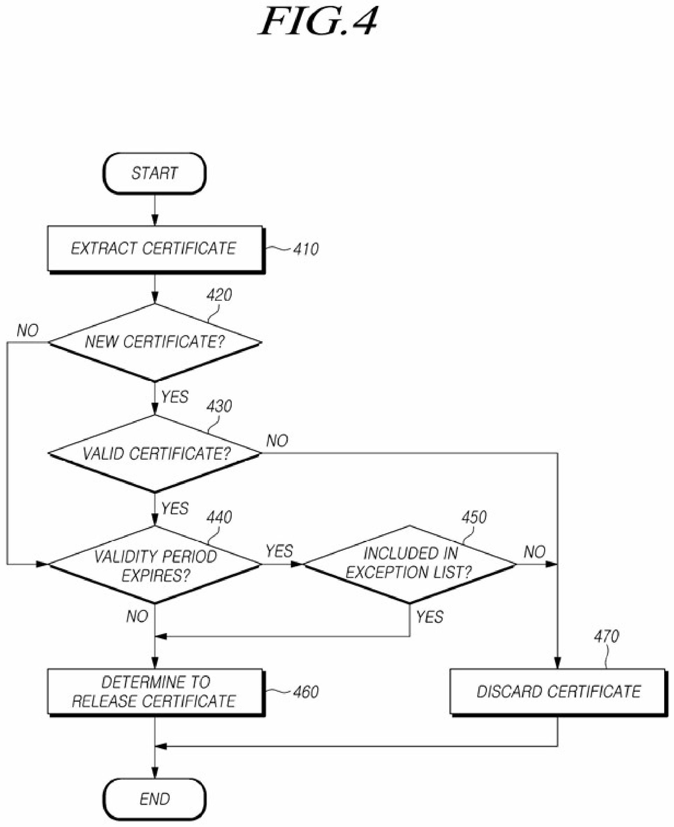

FIG. 4 illustrates a flowchart of an operation method performed by an electronic device according to an embodiment. The electronic device of FIG. 4 may include a device corresponding to the electronic device 100 of FIGS. 1 and 2 or a device corresponding to the authentication device 220 of FIG. 2.

According to an embodiment, in operation 410, the electronic device 100 may extract a certificate.

In an embodiment, the electronic device 100 may extract the certificate from a file list installed in the electronic device100.

In an embodiment, the electronic device 100 may identify the file list in the release image of the electronic device 100. The release image may include an image file of software and firmware installed in the electronic device 100. The release image may include data about an operating system and an application of the electronic device 100.

In an embodiment, the electronic device 100 may extract certificate information from the file list. For example, the electronic device 100 may extract certificate information from a file using a specific command (e.g., an openSSL command).

In an embodiment, the electronic device 100 may extract string information in the file for all binary files. For example, the electronic device 100 may extract a specific pattern in the binary file through reversing. For example, the electronic device 100 may extract a specific pattern in the binary file through a specific command (e.g., a strings command of Linux).

In an embodiment, the electronic device 100 may convert the pattern into a character string to identify whether there is certificate start information (e.g., BEGIN CERTIFICATE). The electronic device 100 may analyze a character string following the certificate start information to determine whether there is a character string (e.g., a character string starting with "") used for the certificate information. When there is a character string used for the certificate information in the character string following the certificate start information, the electronic device 100 may store the character string in the buffer. When the electronic device 100 identifies the certificate end information (e.g., END CERTIFICATE), the electronic device 100 may store the character string buffer stored so far as a certificate file (e.g., pem file).

In an embodiment, the electronic device 100 may extract certificate information from the generated certificate file. The electronic device 100 may extract certificate information by parsing the generated certificate file with a specific command (e.g., an openSSL command). When the certificate information is normally extracted, the electronic device 100 may determine the certificate as normal certificate information and store the certificate in the electronic device 100. Otherwise, the electronic device 100 may discard the certificate.

In an embodiment, in operation 420, the electronic device 100 may determine whether the certificate is a new certificate. That is, in operation 410, the electronic device 100 may determine whether the extracted certificate corresponds to a certificate stored in memory or database (e.g., the DB 222) of the electronic device 100.

In an embodiment, when it is determined that the certificate is a new certificate, the electronic device 100 may perform operation 430.

In an embodiment, when it is determined that the certificate is not a new certificate, the electronic device 100 may perform operation 440.

In an embodiment, in operation 430, the electronic device 100 may determine whether the certificate is a valid certificate.

In an embodiment, the electronic device 100 may verify whether the certificate is a valid certificate. The electronic device 100 may determine whether information regarding a certificate is included in a database containing information regarding the certificate within the electronic device 100. The electronic device 100 may communicate with a certificate issuing agency (e.g., the certificate issuing agency 230) to request verification that the certificate is a valid certificate, and may transmit a response regarding whether the certificate is valid.

In an embodiment, the electronic device 100 may determine that the certificate is valid if the database includes information about the certificate. The electronic device 100 may determine that the certificate is invalid if the database does not contain information about the certificate. The electronic device 100 may determine that the certificate is valid if the electronic device 100 receives a response from the certificate issuing agency indicating that the certificate is valid. The electronic device 100 may determine that the certificate is invalid if the electronic device 100 receives a response from the certificate issuing agency that the certificate is invalid.

In an embodiment, when it is determined that the certificate is valid, the electronic device 100 may perform operation 440. When it is determined that the certificate is invalid, the electronic device 100 may discard the certificate in operation 470.

In an embodiment, in operation 440, the electronic device 100 may determine whether the validity period of the certificate expires. Even if the certificate is a formally normal certificate, if the expiration date of the validity period is exceeded or the remaining validity period is less than or equal to a predetermined period, the electronic device 100 may determine that the validity period of the certificate expires.

In an embodiment, although not illustrated, when the algorithm of the certificate does not correspond to a predetermined algorithm (e.g., when the algorithm of the certificate is MD5, SHA1, etc.), the electronic device 100 may determine that the validity period of the certificate expires. Since a certificate generated using an algorithm other than the predetermined algorithm may have a security issue, the certificate may not be released because the validity period is considered to expire.

In an embodiment, based on the validity period of the certificate being determined to not expire, the electronic device 100 may perform operation 460. Based on the validity period of the certificate being determined to expire, the electronic device 100 may perform operation 450.

In an embodiment, in operation 450, the electronic device 100 may determine whether the certificate is included in an exception list. The exception list is a list including certificates that are defined as exceptionally allowable among invalid certificates, and may include data managed as a separate hash file of the electronic device 100. The certificate included in the exception list may be allowed to be used by the electronic device 100 even if the valid period expires. Based on the validity period of the certificate being determined to expire, and the certificate is not included in the exception list, the electronic device may discard (delete) the certificate in operation 470, because certificate is an unnecessary certificate.

According to an embodiment, in operation 460, the electronic device may determine to release the certificate. Based on it being determined to release the certificate, the electronic device may store the certificate in the electronic device.

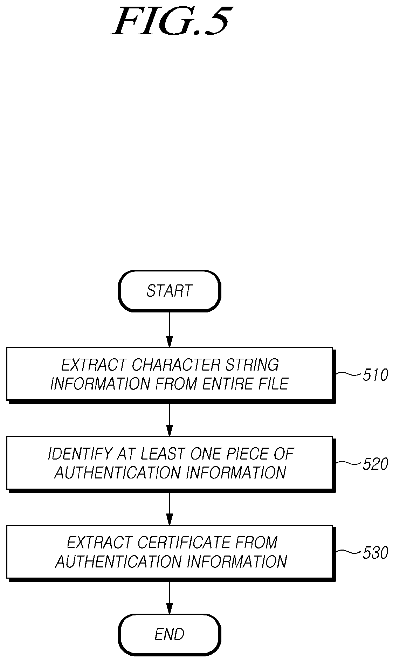

FIG. 5 illustrates a flowchart of an operation method performed by an electronic device according to an embodiment. The operation flow described with reference to FIG. 5 may correspond to operation 410 of FIG. 4.

According to an embodiment, in operation 510, the electronic device (e.g., the electronic device 100 of FIG.1, the electronic device 100 of FIG.2) may extract character string information from files stored in the electronic device 100.

v, the electronic device 100 may identify the file list in the release image of the electronic device 100. The file list includes entire files The release image may include an image file of software and firmware installed in the electronic device 100. The release image may include data about an operating system and an application of the electronic device 100.

In an embodiment, the electronic device 100 may extract certificate information from the file list. For example, the electronic device 100 may extract certificate information from a file using a specific command (e.g., an openSSL command).

In an embodiment, the electronic device 100 may extract string information in the file for all binary files. For example, the electronic device 100 may extract a specific pattern in the binary file through reversing. For example, the electronic device 100 may extract a specific pattern in the binary file through a specific command (e.g., a strings command of Linux).

In an embodiment, the electronic device 100 may convert the pattern into character string information.

According to an embodiment, in operation 520, the electronic device 100 may identify at least one piece of authentication information.

In an embodiment, the electronic device 100 may identify whether there is certificate start information (e.g., BEGIN CERTIFICATE). The electronic device 100 may analyze a character string following the certificate start information to determine whether there is a character string (e.g., a character string starting with "") used for the certificate information. When there is a character string used for the certificate information in the character string following the certificate start information, the electronic device 100 may store the character string in the buffer. When the electronic device identifies the certificate end information (e.g., END CERTIFICATE), the electronic device may store the character string buffer stored so far as a certificate file (e.g., pem file).

According to an embodiment, in operation 530, the electronic device 100 may extract a certificate from the authentication information.

In an embodiment, the electronic device 100 may extract certificate information from the generated certificate file. The electronic device 100 may extract certificate information by parsing the generated certificate file with a specific command (e.g., an openSSL command). When the certificate information is normally extracted, the electronic device 100 may determine the certificate as normal certificate information and store the certificate in the electronic device. Otherwise, the electronic device may discard the certificate.

The operations illustrated in FIGS. 4 and 5 may be operations of an electronic device (e.g., the electronic device 100 of FIG. 1, the electronic device 100 of FIG. 2) or operations performed by a certificate validation device (e.g., the certificate validation device 220 of FIG. 2). In other words, although it is described as operating in the certificate validation device, the electronic device itself may perform the operations.

A method for operating an electronic device, according to an embodiment of the disclosure, may include extracting a certificate from a file stored in the electronic device 100, transmitting a verification request for the certificate to a certificate issuing agency based on identifying that the certificate is a new certificate, determining whether a validity period of the certificate expires, based on receiving a response indicating that the certificate is valid from the certificate issuing agency, determining whether the certificate is included in an exception list when the validity period of the certificate expires, and storing the certificate in memory of the electronic device based on determining that the certificate is included in the exception list. The exception list may include at least one certificate.

In an embodiment, the method for operating the electronic device may include identifying the certificate as the new certificate based on identifying that the extracted certificate is stored in the memory or a database of the electronic device 100.

In an embodiment, the method for operating the electronic device may include determining whether the validity period of the certificate expires, based on identifying that the extracted certificate is not the new certificate.

In an embodiment, the method for operating the electronic device may include deleting the certificate from the electronic device 100 based on identifying that the certificate is not included in the exception list.

In an embodiment, the method for operating the electronic device may include deleting the certificate based on receiving a response indicating that the certificate is invalid from the certificate issuing agency.

In an embodiment, the method for operating the electronic device may include identifying an entire file of the electronic device, extracting character string information from the entire file, identifying at least one piece of authentication information from the character string information, and extracting the certificate from the at least one piece of authentication information.

In an embodiment, the method for operating the electronic device may include files of the electronic device, which may include a release image of the electronic device.

In an embodiment, the method for operating the electronic device may include identifying certificate start information from the character string information, identifying certificate end information, and extracting a character string between the certificate start information and the certificate end information as the certificate.

In an embodiment, the release image may include data related to software and firmware of the electronic device.

In an embodiment, the method for operating the electronic device may include transmitting the verification request for the certificate to the certificate issuing agency through an access point(AP).

An electronic device according to an embodiment of the disclosure may include memory, a communication device, and a processor electrically connected to the memory and the communication device. The processor may be configured to extract a certificate from files stored in the electronic device, transmit a verification request for the certificate to a certificate issuing agency based on identifying that the certificate is a new certificate, determine whether a validity period of the certificate expires, based on receiving a response indicating that the certificate is valid from the certificate issuing agency, determine whether the certificate is included in an exception list when the validity period of the certificate expires, and store the certificate in memory of the electronic device based on determining that the certificate is included in the exception list. The exception list may include at least one certificate.

In an embodiment, the processor may be configured to identify the certificate as the new certificate based on identifying that the extracted certificate is stored in the memory or a database of the electronic device.

In an embodiment, the processor may be configured to determine whether the validity period of the certificate expires, based on identifying that the extracted certificate is not the new certificate.

In an embodiment, the processor may be configured to delete the certificate from the electronic device based on identifying that the certificate is not included in the exception list.

In an embodiment, the processor may be configured to delete the certificate based on receiving a response indicating that the certificate is invalid from the certificate issuing agency.

In an embodiment, the processor may be configured to identify an entire file of the electronic device, extract character string information from the entire file, identify at least one piece of authentication information from the character string information, and extract the certificate from the at least one piece of authentication information.

In an embodiment, the processor may include files of the electronic device, which may include a release image of the electronic device.

In an embodiment, the processor may be configured to identify certificate start information from the character string information, identify certificate end information, and extract a character string between the certificate start information and the certificate end information as the certificate.

In an embodiment, the release image may include data related to software and firmware of the electronic device.

In an embodiment, the processor may be configured to transmit the verification request to the certificate issuing agency through an access point(AP).

The electronic device according to various embodiments of the disclosure may be one of various types of electronic devices. The electronic devices may include, for example, a display device, a portable communication device (e.g., a smartphone), a computer device, a portable multimedia device, a portable medical device, a camera, a wearable device, or a home appliance. According to one or more embodiments of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. As used herein, the singular forms "a," "an," and "the" are intended to include the plural forms as well, unless the context clearly indicates otherwise. As used herein, the term 'and/or' should be understood as encompassing any and all possible combinations by one or more of the enumerated items. As used herein, the terms "include," "have," and "comprise" are used merely to designate the presence of the feature, component, part, or a combination thereof described herein, but use of the term does not exclude the likelihood of presence or adding one or more other features, components, parts, or combinations thereof. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order).

As used herein, the term "part" or "module" may include a component implemented in hardware, software, or firmware, and may interchangeably be used with other terms, for example, "logic," "logic block," "part," or "circuitry". A part or module may be a single integral component, or a minimum unit or part thereof, adapted to perform one or more functions. For example, according to one or more embodiments, 'part' or 'module' may be implemented in a form of an application-specific integrated circuit (ASIC).

As used in various embodiments of the disclosure, the term "if" may be interpreted as "when," "upon," "in response to determining," or "in response to detecting," depending on the context. Similarly, "if A is determined" or "if A is detected" may be interpreted as "upon determining A" or "in response to determining A", or "upon detecting A" or "in response to detecting A", depending on the context.

The program executed by the server device 200 described herein may be implemented as a hardware component, a software component, and/or a combination thereof. The program may be executed by any system capable of executing computer readable instructions.

The software may include computer programs, codes, instructions, or combinations of one or more thereof and may configure the processing device as it is operated as desired or may instruct the processing device independently or collectively. The software may be implemented as a computer program including instructions stored in computer-readable storage media. The computer-readable storage media may include, e.g., magnetic storage media (e.g., ROM, RAM, floppy disk, hard disk, etc.) and an optically readable media (e.g., compact disc (CD) ROM (CD-ROM) or digital versatile disc (DVD). Further, the computer-readable storage media may be distributed to computer systems connected via a network, and computer-readable codes may be stored and executed in a distributed manner. The computer program may be distributed (e.g., downloaded or uploaded) via an application store (e.g., Play Store^{™}), directly between two user equipments (UEs) (e.g., smartphones), or online. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.
The embodiments of the disclosure disclosed in the specification and the drawings provide merely specific examples to easily describe technical content according to the embodiments of the disclosure and help the understanding of the embodiments of the disclosure, not intended to limit the scope of the embodiments of the disclosure. Accordingly, the scope of various embodiments of the disclosure should be interpreted as encompassing all modifications or variations derived based on the technical spirit of various embodiments of the disclosure in addition to the embodiments disclosed herein.

## Claims

1. A method for operating an electronic device, the method comprising:
extracting a certificate from files stored in the electronic device;
transmitting a verification request for the certificate to a certificate issuing agency based on identifying that the certificate is a new certificate;
determining whether a validity period of the certificate expires, based on a response from the certificate issuing agency indicating that the certificate is valid;
determining whether the certificate is included in an exception list based on determining that the validity period of the certificate expires; and
storing the certificate in the electronic device based on determining that the certificate is included in the exception list,
wherein the exception list comprises at least one certificate.

2. The method of claim 1, further comprising identifying the certificate as the new certificate based on identifying that the extracted certificate is stored in a memory of the electronic device or a database corresponding to the electronic device.

3. The method of claim 2, wherein determining whether the validity period of the certificate expires is further performed based on identifying that the extracted certificate is not the new certificate.

4. The method of claim 3, further comprising removing the certificate from the electronic device based on identifying that the certificate is not included in the exception list.

5. The method of claim 1, further comprising removing the certificate from the electronic device based on a response from the certificate issuing agency indicating that the certificate is invalid.

6. The method of claim 1, wherein extracting the certificate from the file stored in the electronic device comprises:
identifying files stored in the electronic device;
extracting character string information from the files;
identifying at least one piece of authentication information from the character string information; and
extracting the certificate from the at least one piece of authentication information.

7. The method of claim 6, wherein the file of the electronic device comprises a release image of the electronic device.

8. The method of claim 6, further comprising:
identifying certificate start information from the character string information;
identifying certificate end information; and
extracting a character string between the certificate start information and the certificate end information as the certificate.

9. The method of claim 7, wherein the release image comprises data related to software and firmware of the electronic device.

10. The method of claim 1 or 6, further comprising transmitting the verification request for the certificate to the certificate issuing agency through an access point (AP).

11. An electronic device, comprising:
memory; and
processor electrically connected to the memory, wherein the processor is configured to:
extract a certificate from files stored in the electronic device;
transmit a verification request for the certificate to a certificate issuing agency based on identifying that the certificate is a new certificate;
determine whether a validity period of the certificate expires, based on a response from the certificate issuing agency indicating that the certificate is valid;
determine whether the certificate is included in an exception list based on determining that the validity period of the certificate expires; and
store the certificate in the memory of the electronic device based on determining that the certificate is included in the exception list, and
wherein the exception list comprises at least one certificate.

12. The electronic device of claim 11, wherein the processor is configured to identify the certificate as the new certificate based on identifying that the extracted certificate is stored in the memory of the electronic device or a database corresponding to the electronic device.

13. The electronic device of claim 12, wherein the processor is configured to determine whether the validity period of the certificate expires based on identifying that the extracted certificate is not the new certificate.

14. The electronic device of claim 13, wherein the processor is configured to remove the certificate from the electronic device based on identifying that the certificate is not included in the exception list.

15. The electronic device of claim 11, wherein the processor is configured to remove the certificate based on a response from the certificate issuing agency indicating that the certificate is invalid.
